(19) Europäisches Patentamt

European Patent Office

Office européen des brevets

(11) **EP 2 536 224 B1**

(12) **EUROPEAN PATENT SPECIFICATION**

(45) Date of publication and mention
of the grant of the patent:
**23.07.2014  Bulletin 2014/30**

(21) Application number: **11170114.0**

(22) Date of filing: **16.06.2011**

(51) Int Cl.:
**H04W 52/24** *(2009.01)*        **H04W 52/34** *(2009.01)*
**H04W 72/00** *(2009.01)*        **H04L 5/00** *(2006.01)*
**H04W 72/12** *(2009.01)*

(54) **Method for scheduling users in a cellular environment, scheduler and wireless network**

Verfahren zur Zeitplanung von Benutzern in einer zellulären Umgebung, Zeitplaner und Drahtlosnetzwerk

Procédé de programmation d'utilisateurs dans un environnement cellulaire, programmateur et réseau sans fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.12.2012  Bulletin 2012/51**

(73) Proprietor: **NTT DoCoMo, Inc.**
**Chiyoda-ku**
**Tokyo 100-6150 (JP)**

(72) Inventors:
• **Burchardt, Harald**
**Edinburgh, EH3 5QN (GB)**
• **Sinanovic, Sinan**
**Edinburgh, EH16 6DN (GB)**
• **Haas, Harald**
**Edinburgh, EH10 5RE (GB)**
• **Auer, Gunther**
**80339 München (DE)**

(74) Representative: **Zimmermann, Tankred Klaus et al**
**Schoppe, Zimmermann, Stöckeler**
**Zinkler & Partner**
**P.O. Box 246**
**82043 Pullach (DE)**

(56) References cited:
**EP-A1- 2 045 930**

• **KOLYUZHNOV D ET AL: "Power Controlled Random Access in Multi-Cell OFDMA Uplink", VEHICULAR TECHNOLOGY CONFERENCE, 2008. VTC 2008-FALL. IEEE 68TH, IEEE, PISCATAWAY, NJ, USA, 21 September 2008 (2008-09-21), pages 1-5, XP031352557, ISBN: 978-1-4244-1721-6**
• **A. Goldsmith: "Wireless Communications", 8 August 2005 (2005-08-08), CAMBRIDGE UNIVERSITY PRESS, XP002661650, ISBN: 978-0-521-83716-3 * page 435 - page 437 * * page 484 - page 486 * * figure 15.9 ***
• **HANDE P ET AL: "Distributed Uplink Power Control for Optimal SIR Assignment in Cellular Data Networks", INFOCOM 2006. 25TH IEEE INTERNATIONAL CONFERENCE ON COMPUTER COMMUNICA TIONS. PROCEEDINGS, IEEE, PISCATAWAY, NJ, 1 April 2006 (2006-04-01), pages 1-13, XP031072288, DOI: 10.1109/INFOCOM.2006.248 ISBN: 978-1-4244-0221-2**

**Description**

Embodiments of the invention relate to the field of wireless communication networks like cellular or heterogeneous networks composed of micro-cells, pico-cells and femto-cells specifically to joint scheduling and power control in a femto-cellular environment, in particular to a variation of user signal-to-interference-plus noise ration (SINR) targets such that Pareto optimal power control (POPC) can be directly applied.

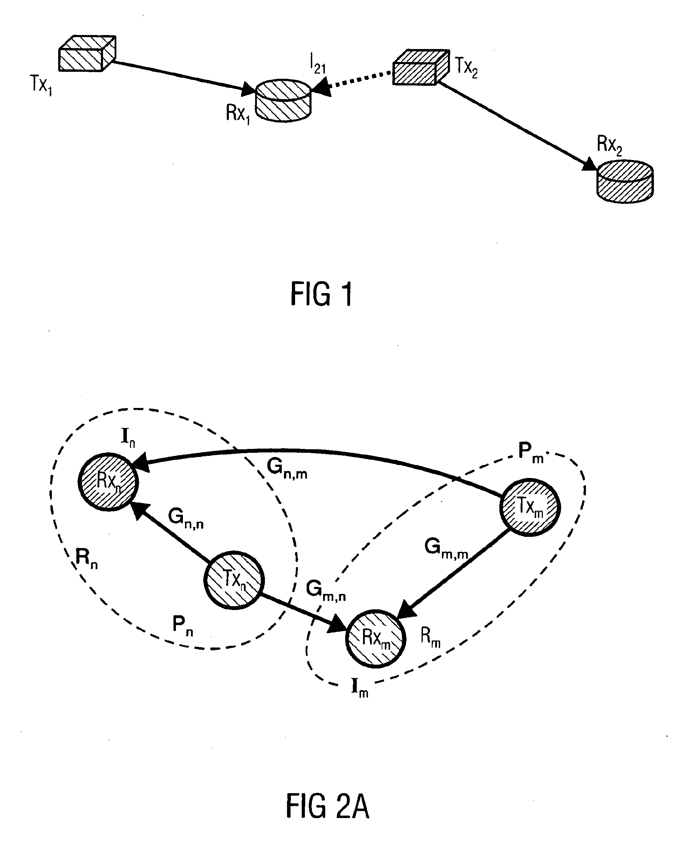

When considering scheduling and power control in the uplink of a cellular or heterogeneous network, e.g. composed of micro-cells, pico-cells and femto-cells, uplink power control is an important aspect and is particularly relevant for densely deployed femto-cell networks, due to their unplanned deployment and the resulting severe interference conditions. Fig. 1 is a schematic representation of a portion of such a cellular network comprising two base stations $Rx_1$ and $Rx_2$ receiving on the uplink connection signals from mobile stations or mobile users $Tx_1$ and $Tx_2$. Mobile stations $Tx_1$ communicate with base station $Rx_1$, while mobile station $Tx_2$ communicates with base station $Rx_2$. As shown in Fig. 1, several transmissions occur concurrently so that interference may occur. In the example shown in Fig. 1 the transmission signal transmitted by mobile station $Tx_2$ for communicating with the associated base station $Rx_2$ is also received at the base station $Rx_1$ as an interference transmission $I_{21}$. Interference may severely effect the attainable spectral efficiency in the network. Therefore, for avoiding negative effects on the spectral efficiency scheduling and power control in the uplink are important aspects. It is noted that the same applies for a downlink connection in such a network in which a transmission occurs from the respective base stations to the associated users, wherein a transmission from a base station may also be received as an interference communication at other mobile stations. When considering Fig. 1, in the downlink scenario the base stations would be in the transmitters $Tx_1$, $Tx_2$ and the mobile stations would be the receivers $Rx_1$ and $Rx_2$.

In X. Li, L. Qian, and D. Kataria, "Downlink power control in co-channel macrocell femtocell overlay," in Proc. Conference on Information Sciences and Systems (CISS), 2009, pp. 383-388, and B.-G. Choi, E. S. Cho, M.Y. Chung, K.-y. Cheon, and A.-S. Park, "A femtocell power control scheme to mitigate interference using listening tdd frame," in Proc. International Conference on Information Networking (ICOIN), Jan. 2011, pp. 241-244, downlink power control mechanisms are described to prevent large co-channel interference (CCI) from a femto-base station (BS) at nearby macro-users. In X. Li, et. al. the downlink power control problem is formulated to address CCI, while quality of service requirements for both the macro- and femto-users are taken into account. This is in contrast to B.-G. Choi, et. al., where macro-cell users are given priority; a listening time-dimension duplex frame is utilized to estimate the channel quality information of the surrounding macro-users, and hence adjust the femto-BS downlink transmit power accordingly. Both known solutions deal with interference reduction to the macro-cell in the downlink, whereas any uplink femto-femto interference is disregarded.

In E.J. Hong, S.Y. Yun, and D.-H. Cho, "Decentralized power control scheme in femtocell networks: A game theoretic approach," in Proc. Personal, Indoor and Mobile Radio Communications (PIMRC), 2009, pp. 415-419, an approach for managing downlink interference between femto-cells and the macro-cell is described. A proportional fair metric is used to minimize interference and improve throughput fairness, however through this the overall system throughput suffers. A further solution to the uplink power control problem is the use of conventional and/or fractional power control as described in A. Rao, "Reverse Link Power Control for Managing Inter-Cell Interference in Orthogonal Multiple Access Systems," in Proc. Of Vehicular Technology Conference (VTV), Oct. 2007, pp. 1837-1841. However, these procedures are developed for the macro-cellular environment and do not guarantee quality of service.

Kolyuzhnov, D. et al: "Power Controlled Random Access in Multi-Cell OFDMA Uplink" Vehicular Technology Conference, 2008. VTC 2008-Fall. IEEE 68th, 21. September 2008, pages 1-5 describes the problem of optimum power allocation and link scheduling in cellular systems. In particular, the uplink performance of OFDMA (orthogonal frequency division multiple access) is investigated. By means of heuristic relaxation, the NP-hard problem of joint power control and scheduling is transformed into one of power controlled random access, which is formulated as a convex optimization problem. It is described that a relative increase in the SINR target of 2dB (from 12dB to 14dB) results in a 100%-130% increase in the Pareto optimum power assuming a cellular full frequency reuse system.

Hande P et al: "Distributed Uplink Power Control for Optimal SIR Assignment in Cellular Data Networks", Infocom 2006, 25th IEEE International Conference on Computer Communications, 1. April 2006, pages 1-13 describes a distributed mechanism to jointly optimize SIR assignment and transmitted power in a multicellular network. Due to interference between mobile stations not all SIR assignments are feasible, and a characterization of a feasible SIR region in terms of the loads of the base stations and an indication of the potential interference from mobile stations is provided. Based on this characterization a distributed algorithm is described that can achieve any Pareto-optimal SIR assignment.

EP 2 045 930 A1 describes a transceiver apparatus for communicating with a communication partner in repetitive radio frames, a radio frame having a transmission time slot and a reception time slot. The transmitter module transmits during a transmission time slot of a second radio frame a second transmit signal with a second transmission power being dependent on the interference power such that a higher interference power results in a lower second transmission power, the second transmission power being dependent on a detected control component such that the second transmission power is lowered compared to a first transmission power when the control component indicates that the reception quality threshold is exceeded at the communication partner.

It is an object of the present invention to provide an improved approach for femto-user power control which provides achievements of users' SINR targets while minimizing the system transmit power.

This object is achieved by a method of claim 1, a scheduler of claim 10 and a wireless network of claim 11.

Embodiments of the invention provide a scheduler for a wireless network having a plurality of cells and a plurality of users, the scheduler being configured to schedule the users in accordance with embodiments of the invention.

Embodiments of the invention provide a wireless network comprising a plurality of cells, a plurality of users, and a scheduler in accordance with embodiments of the invention.

Yet another embodiment of the invention provides a computer program product comprising a program including instructions stored by a computer readable medium, the instructions executing a method in accordance with embodiments of the invention when running the program on a computer.

In accordance with an embodiment modifying the SINR targets comprises identifying the one or more users that account for the largest contribution to the non-fulfillment of the feasibility condition for the Pareto optimal power control; diminishing the respective SINR targets of the one or more users; and augmenting the respective SINR targets of the remaining users to maintain system spectral efficiency. The respective SINR targets of the one or more users are diminished as follows:

$$\gamma_i^* \leftarrow \gamma_i^*(1-r) \atop \gamma_j^* \leftarrow \gamma_j^*(1-r) \quad where \ r = \left\lceil \left(1 - \frac{1}{f(\mathbf{F})}\right) \cdot 10 \right\rceil \cdot \frac{1}{10 \cdot n_r},$$

where

$\gamma_i^*$    is the target SINR of user $i$,
$\gamma_j^*$    is the target SINR of user $j$,
$r$    represents the SINR reduction factor rounded up to a factor of 0.1, and
$n_r$    denotes the number of users whose SINR targets are being reduced; and

the respective SINR targets of the remaining users may be augmented as follows:

$$\gamma_{k \neq \{i,j\}}^* = \frac{(1+\gamma_1^*)(1+\gamma_2^*)(1+\gamma_3^*)}{(1+\gamma_i^*(1-r))(1+\gamma_j^*(1-r))} - 1.$$

In accordance with an embodiment, in case modifying the SINR targets of the users does not result in the feasibility condition for the Pareto optimal power control to be fulfilled, the method further comprises deactivating the user having the weakest desired link gain; adapting a SINR target of the remaining users to maintain system spectral efficiency; determining whether the remaining users fulfill a modified feasibility condition; and in case the remaining users do not fulfill the modified feasibility condition, iteratively modifying the SINR target values until the modified feasibility condition is fulfilled. In case the modified feasibility condition cannot be fulfilled by the users, the user having the best desired link gain may be chosen as the only remaining active link.

In accordance with an embodiment the method further comprises, in case there are one or more users that prevent the satisfaction of the feasibility condition, switching off the associated links. The links may be switched off over a plurality of consecutive time slots, wherein the SINR target of the remaining links is changed for maintaining the system spectral efficiency. The SINR target of the remaining links may be changed as follows:

$$\gamma_{(1),up}^* = \frac{\prod_{j}^{K}\left(1+\gamma_j^*\right)}{1+\gamma_{(2),up}^*} - 1,$$

where $\gamma^{\bullet}_{(i),up}$ represents the updated SINR target of the $i^{th}$ remaining link.

In accordance with an embodiment the method comprises for each combination fulfilling the feasibility condition calculating the Pareto optimal power allocation and assigning it to the users.

In accordance with embodiments of the invention, Pareto optimal power control with SINR variation in a femto-cell system is provided using an approach called Pareto SINR scheduling (PSS) which is a novel scheduling mechanism based on Pareto optimal power control (POPC). The signal-to-interference-plus-noise ratio (SINR) targets of interfering mobile stations (MSs) are modified such that the conditions of POPC are fulfilled while system spectral efficiency is maintained. In accordance with embodiments, a step-wise removal (SR) algorithm is introduced for coping with situations where one or more links do not meet the sufficient conditions for the power control in accordance with POPC. In this case, one or more links are removed in order for the other MSs to achieve their SINR targets, while the targets of the other (remaining) MSs are updated to prevent losses in system spectral efficiency caused by the link removals.

Embodiments of the invention are applicable to cellular as well as heterogeneous networks composed of micro-, pico- and femto-cells.

Thus, embodiments of the invention address a relatively unexplored topic of uplink power control for randomly deployed femto-cells. It is noted that while embodiments of the invention are described with regard to the uplink power control the principles of the inventive approach can be equally implemented for downlink power control. Due to the relative modernity of the femto-cell concept and the innate random deployment of femto-cells within a macro-cell, most power control is utilized for interference reduction to the macro-cell, rather than interference protection between femto-cells. The inventive approach provides for a power control technique for such femto-femto interference environments which also helps diminishing interference to the macro-cell.

The inventive approach is advantageous as it jointly and simultaneously solves the issues of scheduling and power control for high density femto-cell deployments. Further, power usage of the femto-users is minimized due to POPC. The interference emanating from the femto-cell environment is minimized and hence the effects on a macro-cell are mitigated. The SINR variations may be modified over time such that each MS achieves its target spectral efficiency in multiple time slots. All scheduled users, i.e. users that have been assigned resource blocks (RBs) and have not been removed through SR, achieve their SINR targets, and hence also the system spectral efficiency target is achieved. Further, an enhanced sum-rate is achieved through an increase in spatial reviews. Also a proportional fair rate education can be implemented in accordance with which cell-center users are allowed to a higher SINR target (and therefore rate) than cell-edge users. Also energy efficiency is significantly improved through power control in accordance with the inventive approach. Embodiments of the invention will now be described with reference to the accompanying drawings, in which:

Fig. 1    is a schematic representation of a portion of a cellular network;

Fig. 2    shows a schematic representation of a communication system, wherein Fig. 2(a) depicts a schematic representation of two transmitters, and wherein Fig. 2(b) and Fig. 2(c) depict the strengths of a receive signal, a noise signal and an interference signal at two receivers;

Fig. 3    is a schematic representation of a femto-cell deployment in an apartment block

Fig. 4    shows an example of a SR algorithm with SINR target updates over multiple time slots;

Fig. 5    shows a graph depicting the range of values for c and d in equation (6) for which all eigenvalues of F are within the unit circle;

Fig.6    shows the PSS algorithm in accordance with an embodiment of the invention;

Fig. 7    depicts the spectral efficiency results for various power allocation techniques over a range of representative SINR targets; and

Fig. 8    displays the average power usage of a system for various power allocation techniques.

PSS (Pareto SINR Scheduling) focuses on scheduling users such that POPC is applied, and hence system spectral efficiency and energy consumption are optimized. The inventive approach relies on POPC that is, for example, described in A. Goldsmith, Wireless Communications. Cambridge University Press, 2005. POPC allows all users to achieve the SINR targets and also allows minimizing the total transmit power of these mobile stations (MSs).

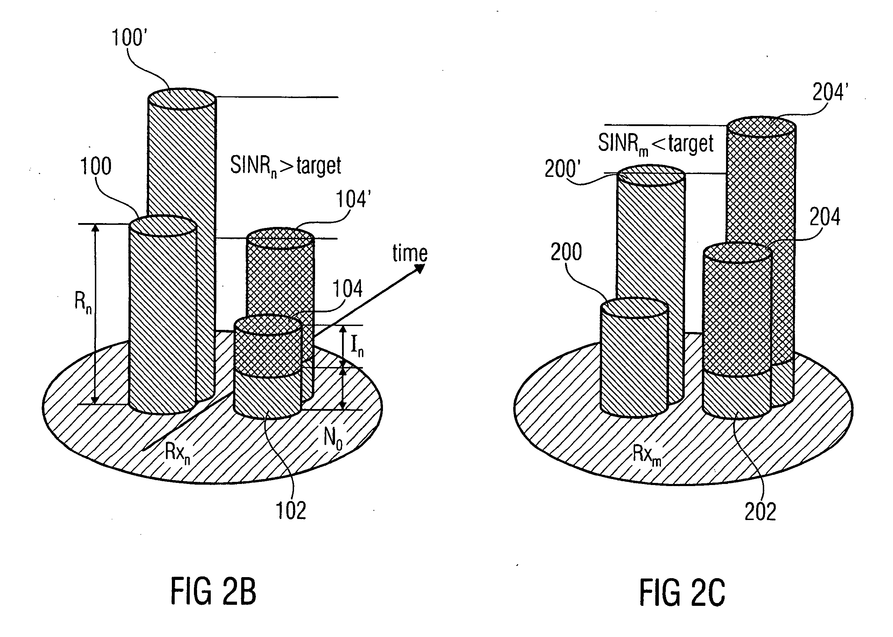

Fig. 2 shows a schematic representation of a communication system. Fig. 2(a) depicts a schematic representation of two transmitters $Tx_n$ and $Tx_m$ transmitting signals. Further, two receivers $Rx_n$ and $Rx_m$ are shown receiving from the transmitters respective signals. In Fig. 2(a) the transmitter $Tx_n$ serves the transmitter $Rx_n$ via a channel having a channel gain $G_{n,n}$. Likewise, the transmitters $Tx_m$ serves the receiver $Rx_m$ via a further channel having a channel gain $G_{m,m}$. However, the respective receivers are also subjected to interference in that receiver $Rx_n$ receives a signal from the transmitter $Tx_m$, via an interference channel having a channel gain $G_{n,m}$. Likewise receiver $Rx_m$ receives a signal from the transmitter $Tx_n$ via an interference channel having a channel gain $G_{m,n}$. The transmit powers of the respective transmitters are denoted as $P_n$ and $P_m$, respectively, and the received power or rather the power level of the signal received at the respective receivers is denoted $R_n$ and $R_m$, respectively. The SINR at receiver $Rx_n$ is calculated as follows:

$$\gamma_n = \frac{R_n}{I_n + N_0}$$

The transmit power is set as follows:

$$\mathbf{P}^* = (\mathbf{I} - \mathbf{F})^{-1}\mathbf{u} \qquad iff \quad \rho_F < 1\,,$$

where:

**P**    Tx power,

**I**    identity matrix,

**F**    interference matrix with $F_{ij} = \dfrac{\gamma_i^* G_{j,v_i}}{G_{i,v_i}}$,

**u**    vector of the noise power scaled by the SINR targets and channel gains,

$\rho_F$    largest eigenvalue of F,

$G_i$    channel gain; and

$\gamma_i^*$    SINR target.

However, increasing the transmit power on one link induces interferences to the other link as is shown in Figs. 2(b) and (c). In Fig. 2 (b) the received power 100 ($R_n$(k)) at a time instance k is indicated. Also the noise signal 102 (No) and the interference signal 104 (In) at time instance k are shown. In Fig. 2(c) the received power 200 at receiver $Rx_m$ at instance k, the noise signal 202 ($N_0$) and the interference signal 204 at the receiver $Rx_m$ is shown at time instance k. The distance between the transmitter $Tx_n$ and the receiver $Rx_m$ is smaller than a distance between the transmitter $Tx_m$ and the receiver $Rx_n$. The distance between the transceiver $Tx_n$ and the receiver $Rx_n$ is shorter than a distance between the transmitter $Tx_m$ and the receiver $Rx_m$. The power received at receiver $Rx_n$ is higher than the power received at receive $Rx_m$ (see Fig. 2(b) and Fig. 2(c)). The noise remains substantially unchanged. Further, the interference signal at the receiver $Rx_n$ is smaller than the interference signal 204 at the receiver $Rx_m$.

In case it is determined that a desired SINR is not achieved at receiver $Rx_m$, and the transmitter $Tx_m$ may be controlled to increase its transmit power as is shown at 200' in Fig. 2(c). However, this, in turn yields a higher interference signal and the receiver $Rx_n$ as is shown at 104' in Fig. 2(b). Further, in case the transmit power of the transmitter $Tx_n$ is increased as is shown at 100' in Fig. 2(b), for example for obtaining a desired SINR at receiver $Rx_n$ this also increases the interference experienced by the receiver $Rx_m$ as is shown at 200'. As can be seen from Fig. 2(b) and from Fig. 2(c), when increasing the transmit power it may be that at the receiver $Rx_m$ the increased reception power 100' results in a SINR that is greater than the SINR target, while an increase of the transmit power of transmitter $Tx_m$ will still result in a SINR at the receiver $Rx_m$ that is below the desired target. The problem with Pareto optimal power control is that the SINR target $\gamma_i^*$ in general, is a predefined constant value so that it does not reflect the interference and channel conditions, and also does not take into consideration that cell-edge users typically achieve a much lower SINR than cell-center users.

Embodiments of the invention address this problem and provide for an approach allowing to apply Pareto optimal power control also in such environments. In accordance with the inventive approach to allow applying POPC the SINR targets of femto-interferers are varied in such a manner that POPC can be applied directly to the interfering MSs. For allowing POPC to be applied to a group of interfering MSs, the following condition must hold:

$$\mathbf{P}^* = (\mathbf{I} - \mathbf{F})^{-1}\mathbf{u} \qquad iff \quad \rho_F < 1, \qquad\qquad (1)$$

where P* is the Pareto optimum power vector, I is the identity matrix, u is the vector of noise power scaled by the SINR targets and channel gains, F is the interference matrix, and $\rho_F$ is the Perron-Frobenius (i.e., maximum absolute) eigenvalue of F. If a group of MSs interfering with each other can fulfill the condition in equation (1), then POPC is utilized and each MS is allocated in optimum transmit power. To be able to schedule users in this way, the condition set forth in equation (1) needs to be formulated such that the network can directly utilize available information, i.e., path gains and SINR targets. After a derivation, the feasibility condition can be formulated as follows:

$$F_{12}F_{21} + F_{13}F_{31} + F_{23}F_{32} + F_{12}F_{23}F_{31} + F_{13}F_{21}F_{32} < 1, \qquad\qquad (2)$$

where

$$F_{ij} = \frac{\gamma_i^* G_{j,v_i}}{G_{i,v_i}} \qquad \text{are the elements of the interference matrix } \mathbf{F},$$

$\gamma_i^*$ is the target SINR of MS $i$, and
$G_{j,v_j}$ is the path gain between MS $j$ and the BS $v_i$ of MS $i$.

Thus, the feasibility condition is expressed in terms of path gains and SINR targets, and the users can be scheduled accordingly.

A key component of PSS is the variation of users' SINR targets when the condition in Eq. (2) is not satisfied for the given SINR requirements. After identifying the MS(s) that account for the largest contribution to $f(\mathbf{F}) > 1$, the respective SINR targets of these users are diminished in accordance:

$$\begin{aligned}\gamma_i^* &\leftarrow \gamma_i^*(1-r) \\ \gamma_j^* &\leftarrow \gamma_j^*(1-r)\end{aligned} \; where \; r = \left\lceil \left(1 - \frac{1}{f(\mathbf{F})}\right) \cdot 10 \right\rceil \cdot \frac{1}{10 \cdot n_r}, \qquad\qquad (3)$$

wherein the SINR target of the (in this case) single remaining user is augmented in order to maintain system spectral efficiency

$$\gamma_{k \neq (i,j)}^* = \frac{(1+\gamma_1^*)(1+\gamma_2^*)(1+\gamma_3^*)}{(1+\gamma_i^*(1-r))(1+\gamma_j^*(1-r))} - 1. \qquad\qquad (4)$$

Through this SINR variation, $f(\mathbf{F})$ can be reduced, and the users can be scheduled to transmit simultaneously.

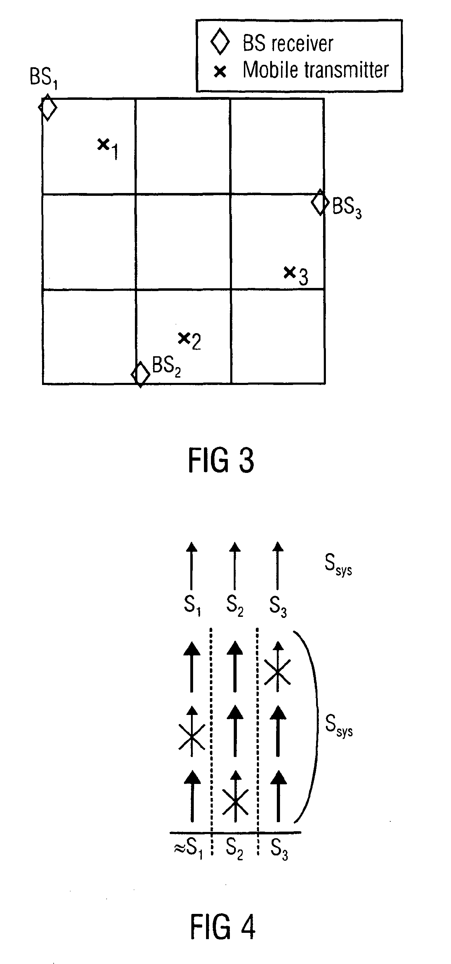

Fig. 3 is a schematic representation of a femto-cell deployment in an apartment block. Fig. 3 shows three base stations $BS_1$, $BS_2$, and $BS_3$ as well as three mobile stations $x_1$, $x_2$, and $x_3$. Fig. 3, thus, shows, three femto-cells $C_1$, $C_2$, and $C_3$. In accordance with embodiments of the invention, it is assumed that one user is provided per cell and that the interfering path gains are fixed. In accordance with the inventive approach, a Pareto optimal power control with a variable SINR target is provided wherein the SINR targets of the respective users are varied so as to achieve $\rho_F < 1$ which allows for serving more links simultaneously and also for taking into account the channel conditions of particular users.

In accordance with an embodiment, an algorithm for Pareto optimal power control with several SINR targets comprises as a first step a power control step for determining whether the above mentioned feasibility condition is met, i.e. whether $\rho_F$ is small than 1. In case this is not true, in a second step a SINR target adjustment takes place for reducing the SINR target $\gamma_i^*$ of the weakest link and increasing the SINR target of the other links so that the spectral efficiency is maintained. In case it is determined that still the feasibility condition is not met, at least one of the links that does not achieve the SINR target is removed until the feasibility condition is met. This will be described in further detail below.

Considering again the femto-cell deployment shown in Fig. 3, it is assumed that only a single MS per femto-cell is present so that the interfering path gains are fixed. Hence, if the feasibility conditions or sufficient conditions for POPC are not met, the SINR targets of the users will be varied to achieve $\rho_F < 1$. This is done by identifying the strongest interfering MS(s) and reducing the corresponding SINR target(s), while increasing the remaining target(s) to maintain system spectral efficiency. If it is possible to schedule the users in the system such that condition (2) is fulfilled, then with POPC every user will achieve its target SINR and the total system power will be minimized.

An example of such a scheduling instance is shown in Fig. 3 in which the three femto-cells $C_1$-$C_3$ within the apartment interfere with each other. The initial SINR targets of the mobile stations $x_1$-$x_3$ are not compatible for simultaneous transmission. After identifying the main culprits for the infeasibility of the scenario, in the example shown it is assumed that mobile stations $x_2$ and $x_3$ are not compatible, in accordance with the inventive approach (BSs) the SINR targets are updated in accordance with Eqs. (3) and (4) such that the new targets allow for all users $x_1$-$x_3$ to be scheduled. This allows using POPC and after POPC is applied, each mobile station will achieve its SINR target with Pareto optimal transmit power.

For example, when considering Fig. 3, initially the SINR targets of the mobile stations $x_1$-$x_3$ are as follows:

$$\left(\gamma_1^*, \gamma_2^*, \gamma_3^*\right) = (10, 12, 8), \text{ and}$$

$$f\left(\mathbf{F}\right) \approx 1.35, \quad r = 0.15.$$

Thus, the initial SINR targets did not fulfill the feasibility condition, i.e. $f(\mathbf{F})$ is greater than 1. Thus, POPC could not be applied. In accordance with the inventive approach, the SINR targets of the mobile stations $x_1$-$x_3$ are updated using PSS, more specifically on the basis of Eqs. (3) and (4). This results in updated SINR targets for mobile stations

$x_1$-$x_3$ as follows: $\left(\gamma_1^*, \gamma_2^*, \gamma_3^*\right) \leftarrow (13.7, 10.2, 6.8), \text{ and}$

$$f\left(\mathbf{F}\right) \approx 0.92.$$

Thus, the feasibility condition for allowing the use of POPC is met and all mobile stations shown in Fig. 3 can now be scheduled.

Scheduling may take place either in the respective base stations $BS_1$-$BS_3$ communicating with each other via a backbone network or in an entity at a higher level in the network, for example in the base station of the macro-cell.

In accordance with embodiments, some mobile stations may be at a position preventing the satisfaction of the condition for POPC. For example, such mobile stations may be arranged at the cell-edge. In such embodiments, these links need to be switched off in order to allow the other femto-cell users to be scheduled and achieve their SINR targets. In addition, because turning off any link may harm the system spectral efficiency, the SINR targets of the other MSs need to be updated to cover the removed spectral efficiency from the excluded user. Through this mechanism, POPC may still be applied with a link (or multiple links if needed) removed, thereby maintaining spectral efficiency and allowing for a minimum transmit power usage.

An example of the SR algorithm is shown in Fig. 4 with SINR target updates over multiple time slots. As is shown in Fig. 4, over multiple time slots $S_1$ to $S_3$ for a mobile station each of the three links is removed once, as is shown by the dashed arrow having the x. At the same time, the SINR targets (and consequently the spectral efficiency) of the two remaining links are augmented as is indicated by larger, bold arrows. By this approach, in each time slot and over all time slots (in the example shown over three time slots) the spectral efficiency $S_{sys}$ is maintained. Furthermore, over three time slots each individual MS can achieve its target spectral efficiency, because the two inflated transmissions compensate for the loss of the removed transmission. Hence, both the system and the individual spectral efficiencies are maintained through the SINR target updates in the SR algorithm, while the link removals in each slot allow for scheduling of the other two users.

In the following, embodiments of the inventive approach will be described in further detail. In Pareto optimal power allocation, given a feasible link allocation, *i.e.*, $\rho_F < 1$, a vector $\mathbf{P}^* = (\mathbf{I} - \mathbf{F})^{-1}\mathbf{u}$ can be found such that all users achieve their SINR requirements with minimal power. This is a highly desirable result which, depending on the locations and SINR targets of the interfering MSs, may not always be possible. Hence, by adjusting the SINR targets of the interferers in such a manner as to create a feasible $\mathbf{F}$ matrix, the system spectral efficiency can be maximized. A scheduler in accordance with embodiments of the invention allowing for this will now be described.

Since for a group of MSs to be feasible $\rho F < 1$, it follows the modulus of all eigenvalues $\lambda i$ of F must also be less than unity, i.e., $|\lambda_i| < 1, \forall i = 1,..., K$. In other words, all eigenvalues must lie within the unit circle.

In E. Jury, "A simplified stability criterion for linear discrete systems," Proceedings of the IRE, vol. 50, no. 6, pp. 1493-1500, 1962, a simplified analytic test of stability of linear discrete systems is described. The test also yields the necessary and sufficient conditions for any real polynomial to have all its roots inside the unit circle. Hence, this test can be directly applied to the characteristic function $f_F(\lambda)$ of the matrix $\mathbf{F}$, whose roots are the eigenvalues of $\mathbf{F}$, and thus need to lie within the unit circle. The characteristic function of $\mathbf{F}$, $f_F$, can be expressed as follows:

Given

$$\mathbf{F} = \begin{bmatrix} 0 & F_{12} & F_{13} \\ F_{21} & 0 & F_{23} \\ F_{31} & F_{32} & 0 \end{bmatrix}$$

$$f_{\mathbf{F}_3}(\lambda) = \det\left(\mathbf{F} - \lambda\mathbf{I}\right) = 0$$

$$= -\lambda^3 + \lambda(F_{12}F_{21} + F_{13}F_{31} + F_{23}F_{32}) + F_{12}F_{23}F_{31} + F_{13}F_{21}F_{32} \tag{5}$$

$$= \lambda^3 + c\lambda + d \tag{6}$$

Hence:

$$c = -F_{12}F_{21} - F_{13}F_{31} - F_{23}F_{32}$$

$$d = -F_{12}F_{23}F_{31} - F_{13}F_{21}F_{32}$$

In E. Jury, "A simplified stability criterion for linear discrete systems," Proceedings of the IRE, vol. 50, no. 6, pp. 1493-1500, 1962, the stability constraints for a polynomial of order $K=3$ are given as:

$$f(z) \quad = a_3 z^3 + a_2 z^2 + a_1 z + a_0, \quad a_3 > 0$$

$$1) \quad |a_0| < a_3$$

$$2) \quad a_0^2 - a_3^2 < a_0 a_2 - a_1 a_3 \tag{7}$$

$$3) \quad a_0 + a_1 + a_2 + a_3 > 0, a_0 - a_1 + a_2 - a_3 < 0$$

In E. Jury, "A simplified stability criterion for linear discrete systems," Proceedings of the IRE, vol. 50, no. 6, pp. 1493-1500, 1962, the stability constraints are for a polynomial of degree $n$ to have all its $n$ roots within the unit circle, which is a necessary condition for the stability of linear discrete systems. However, in accordance with the inventive approach the stability of the polynomial is not an issue, rather it is to be ensured that the roots, which are the eigenvalues of $\mathbf{F}$, lie within the unit circle so that $\mathbf{F}$ becomes feasible.

The above conditions can now be applied to the characteristic function $f_{F_3}(\lambda)$

$$f_{\mathbf{F}_3}(\lambda) = \lambda^3 + c\lambda + d$$

$$a_3 = 1, a_2 = 0, a_1 = c, a_0 = d,$$

$$1) \quad |d| < 1$$

$$2) \quad d^2 - 1 < c \to c > 1 - d^2$$

$$3) \quad d + c + 1 > 0 \to c > -d - 1,$$

$$\quad\quad d - c - 1 < 0 \to c > d - 1 \tag{8}$$

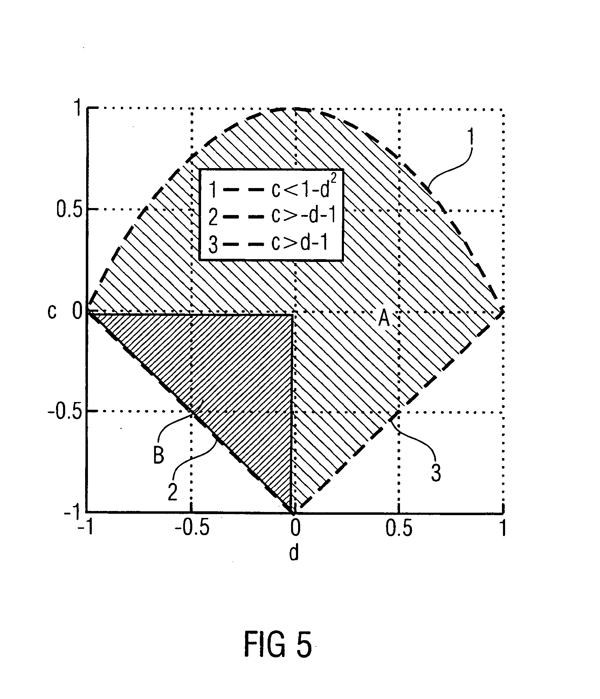

which describes the ranges of $c$ and $d$ for which $\mathbf{F}$ is feasible. These are shown in Fig. 5 by the dotted lines and the enclosed area. In Fig. 5 the enclosed area depicts the range of values for c and d in equation (6) for which all eigenvalues of F are within the unit circle. Due to the nature of $c, d < 0$, the area B within the dotted lines 1, 2 and 3 denotes a specific feasibility area. However, since $F_{i,j} > 0$, $\forall i,j$, it is clear that both $c, d < 0$, and hence the feasible area is substantially reduced (from the area A to the area B in Fig. 5), and the constraints are reduced to only a single one, such that the feasibility condition becomes:

$$3) \quad c > -d - 1$$

$$-F_{12}F_{21} - F_{13}F_{31} - F_{23}F_{32} > F_{12}F_{23}F_{31} + F_{13}F_{21}F_{32} - 1$$

$$\textbf{So, } \rho_F < 1 \textit{ if}:$$

$$F_{12}F_{21} + F_{13}F_{31} + F_{23}F_{32} + F_{12}F_{23}F_{31} + F_{13}F_{21}F_{32} < 1. \tag{9}$$

In the following the SINR variation in accordance with embodiments of the invention will be described. The feasibility condition given in (9) can be re-written as

$$f(\mathbf{F}) = F_{12}F_{21} + F_{13}F_{31} + F_{23}F_{32} + F_{12}F_{23}F_{31} + F_{13}F_{21}F_{32} < 1$$

$$= \gamma_1^* \gamma_2^* \left( \rho^2 \frac{G_{1,v_2} G_{2,v_1}}{G_{1,v_1} G_{2,v_2}} \right) + \gamma_1^* \gamma_3^* \left( \rho^2 \frac{G_{1,v_3} G_{3,v_1}}{G_{1,v_1} G_{3,v_3}} \right) + \gamma_2^* \gamma_3^* \left( \rho^2 \frac{G_{2,v_3} G_{3,v_2}}{G_{2,v_2} G_{3,v_3}} \right) +$$

$$+ \gamma_1^* \gamma_2^* \gamma_3^* \left( \rho^3 \frac{G_{1,v_2} G_{2,v_3} G_{3,v_1} + G_{1,v_3} G_{2,v_1} G_{3,v_2}}{G_{1,v_1} G_{2,v_2} G_{3,v_3}} \right)$$

$$= \gamma_1^* \gamma_2^* A_{12} + \gamma_1^* \gamma_3^* A_{13} + \gamma_2^* \gamma_3^* A_{23} + \gamma_1^* \gamma_2^* \gamma_3^* A_{123} \tag{10}$$

where A = $\{A_{12}, A_{13}, A_{23}, A_{123}\}$ is the set of coefficients of $f$ that are constant throughout the SINR variation. Therefore if $f(\mathbf{F}) > 1$, by finding max{A} the largest coefficient can be found, and hence the SINR targets preceding the coefficient can be reduced to ultimately decrease $f(\mathbf{F})$. This is described in the following.

Given $f(\mathbf{F}) > 1$ and max{A} =$A_{ij}$, $\gamma_i^*$ and $\gamma_j^*$ need to be reduced such that $f(\mathbf{F}) < 1$. The reduction is performed as follows:

$$r = \left\lceil \left(1 - \frac{1}{f(\mathbf{F})}\right) \cdot 10 \right\rceil \cdot \frac{1}{10 \cdot n_r} \qquad (11)$$

$$\gamma_i^* \leftarrow \gamma_i^*(1-r)$$

$$\gamma_j^* \leftarrow \gamma_j^*(1-r)$$

where r in (11) represents the SINR reduction factor rounded up to a factor of 0.1 (this is accomplished by $\left\lceil \cdot \lceil 10 \rceil \cdot \frac{1}{10} \right\rceil$;

the reason for this rounding is two-fold: firstly, since $f(\mathbf{F})$ must be <1, without the rounding $f(\mathbf{F})$ would be steered towards 1 and not below; secondly, the SINR increase of the third user will again slightly increase $f(\mathbf{F})$, and $n_r$ denotes the number of MSs whose SINR targets are being reduced (in the above case, $n_r$ =2). To maintain the desired system spectral efficiency however, the remaining user's SINR target must be increased, which is done quite simply

$$\gamma_{k \neq \{i,j\}}^* = \frac{(1+\gamma_1^*)(1+\gamma_2^*)(1+\gamma_3^*)}{(1+\gamma_i^*(1-r))(1+\gamma_j^*(1-r))} - 1. \qquad (12)$$

Through this, the system spectral efficiency is maintained while the value of $f(\mathbf{F})$ is decreased. This procedure, although it may achieve the desired SINR target constellation by the first reduction/increase, is repeated until either

$\gamma_i^*, \gamma_j^* < \gamma_{\min}$, or $f(\mathbf{F}) < 1$ (this will become evident in the algorithm described n further detail below).

For the (rather unlikely) case that max{A} $= A_{123}$, the strongest interferer MS $i$ is found (*i.e.*, as in the Stepwise Removal algorithm it is the column of $\mathbf{F}$ with the largest sum), and the same reduction is performed except $n_r$ = 1 in (11). The SINR target increase of the remaining MS is then performed as

$$\gamma_{\{j,k\} \neq i}^* = \sqrt{\frac{(1+\gamma_1^*)(1+\gamma_2^*)(1+\gamma_3^*)}{(1+\gamma_i^*(1-r))}} - 1. \qquad (13)$$

In both POPC and the Foschini-Miljanic algorithm (an iterative implementation of POPC and described in A. Goldsmith, Wireless Communications University Press 2005), if $\rho_F \nless 1$ then no solution is available, and hence $\mathbf{P} \rightarrow 0$ or $\mathbf{P} \rightarrow (P_{max},...,P_{max})^T$, respectively. In these cases, either none of the links will transmit, or transmit with (most-likely) too much power, and hence these solutions are suboptimal.

To address this problem is to successively remove single links from the group of interfering MSs, until a $\mathbf{F}$ is achieved with $\rho_F < 1$. At each step, the link is removed that is causing the largest interference to the other users, *i.e.*, the column of $\mathbf{F}$ with the largest sum (both the column and the corresponding row are removed from $\mathbf{F}$). However, turning off one of the links will harm the system spectral efficiency, and hence, in accordance with embodiments, an update function is provided to amend the SINR targets of the remaining links such that the system spectral efficiency does not suffer:

$$\gamma_{(1),up}^* = \frac{\prod_{j}^{K}(1+\gamma_j^*)}{1+\gamma_{(2),up}^*} - 1, \qquad (14)$$

where $\gamma^{*}_{(i),up}$ represents the updated SINR target of the $i^{th}$ remaining link. Since equation (14) has infinite solutions, an additional condition on $\gamma^{*}_{(1),up}$ and $\gamma^{*}_{(2),up}$ such as a power minimization

$$Solve(14) \ s.t. \quad \min\left\{\gamma^{*}_{(1),up} + \gamma^{*}_{(2),up}\right\}, \tag{15}$$

or an equal absolute SINR increase

$$Solve\ (14)\ s.t. \quad \gamma^{*}_{(1),up} - \gamma^{*}_{(1)} = \gamma^{*}_{(2),up} - \gamma^{*}_{(2)}, \tag{16}$$

is necessary. Finally, when two links have been removed and only a single link remains,

$$\gamma^{*}_{(1),up} = \prod_{j}^{K}\left(1 + \gamma^{*}_{j}\right) - 1 \tag{17}$$

and $\mathbf{F} = 0$, $\rho_F = 0$, and $\mathbf{P} = \mathbf{u} = \dfrac{n\gamma^{*}_{(1),up}}{G_{1,v_1}}$ .

Through this form of link removal, the system spectral efficiency can be maintained while maximizing the number of transmitting users according to the feasibility constraint $\rho_F$. Furthermore, it prevents the explosion of transmit powers that results from the Foschini-Miljanic algorithm, and the annihilation of links caused by POPC.

In the case that the scheduler is unable to find feasible groups for particular MSs (due to e.g., location at cell-edge), the SR algorithm will turn off one of the links in a group of MSs, resulting in a feasibility matrix $\mathbf{F}$ of size $K$-1x$K$-1, in the three-cell case 2x2:

$$\mathbf{F} = \begin{bmatrix} 0 & F_{12} \\ F_{21} & 0 \end{bmatrix} \tag{18}$$

Hence, the characteristic function is given by

$$\begin{aligned} f_{\mathbf{F}_2}(\lambda) &= \det\left(\mathbf{F} - \lambda\mathbf{I}\right) \\ &= \lambda^2 - F_{12}F_{21} = 0 \\ &= \lambda^2 + c \\ c &= -F_{12}F_{21} \end{aligned} \tag{19}$$

Again from E. Jury, "A simplified stability criterion for linear discrete systems," Proceedings of the IRE, vol. 50, no. 6, pp. 1493-1500, 1962, the stability constraints for a polynomial of order $K$-1=2 are

$$
\begin{aligned}
f(z) &= a_2 z^2 + a_1 z + a_0, \quad a_2 > 0 \\
1) &\quad |a_0| < a_2 \\
2) &\quad a_0 + a_1 + a_2 > 0, \quad a_0 - a_1 + a_2 > 0
\end{aligned}
\tag{20}
$$

Applying these conditions to the $f_{\mathbf{F}_2}(\lambda)$ yields

$$
\begin{aligned}
f_{\mathbf{F}_2}(\lambda) &= \lambda^2 + c \\
a_2 &= 1, a_1 = 0, a_0 = c, \\
1) &\quad |c| < 1 \\
2) &\quad c + 1 > 0 \rightarrow 1 > -c,
\end{aligned}
\tag{21}
$$

and hence the **feasibility condition** is given by

$$
2) \begin{array}{l} 1 > -c \\ 1 > F_{12} F_{21} \end{array} \qquad So, \; \rho_F < 1 \; if: \quad F_{12} F_{21} < 1.
\tag{22}
$$

If, now, the feasibility condition (22) is not satisfied, the SINR target of the MS $i$ with the weaker desired channel gain will be reduced according to (11) with $n_r = 1$, while MS $j$ with the stronger desired link receives a SINR target boost according to

$$
\gamma_j^* = \frac{(1 + \gamma_i^*)(1 + \gamma_j^*)}{1 + \gamma_i^*(1 - r)} - 1,
\tag{23}
$$

to maintain the system spectral efficiency (the MS with the stronger desired link is chosen for the SINR target boost as it will require less power than the weaker MS to achieve it due to its enhanced desired channel gain, and hence causes less interference). This is again repeated until either $\gamma_i^* < \gamma_{\min}$, or $f(\mathbf{F}) < 1$.

Finally, if the scheduler is unable to find $\{\gamma_i^*, \gamma_j^*\} \geq \gamma_{\min}$ such that $\mathbf{F}$ becomes feasible, the MS with the weaker desired link is removed, and the SINR target of the remaining user is updated according to (17).

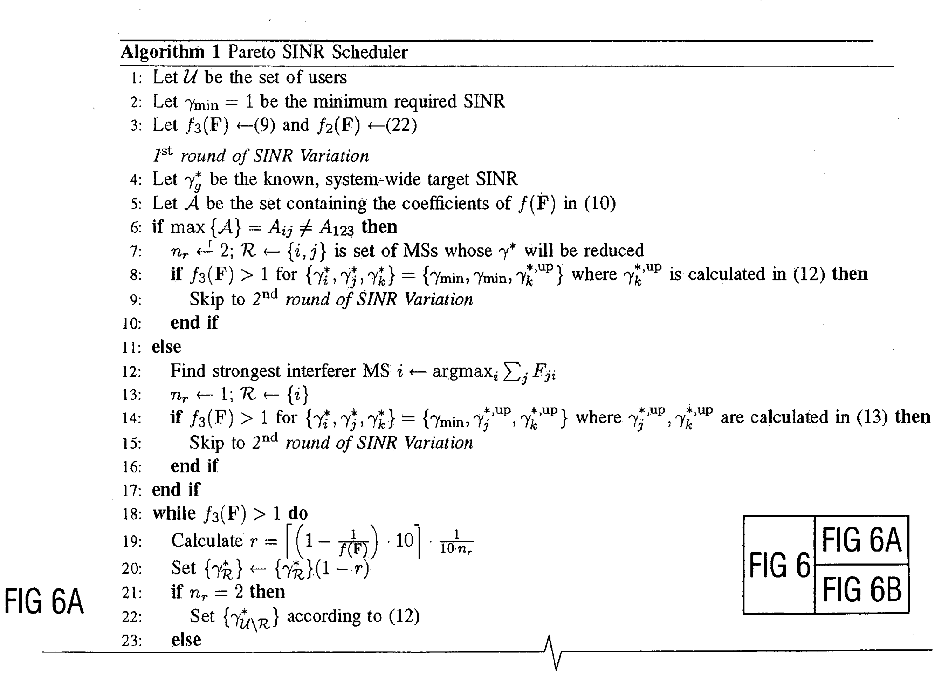

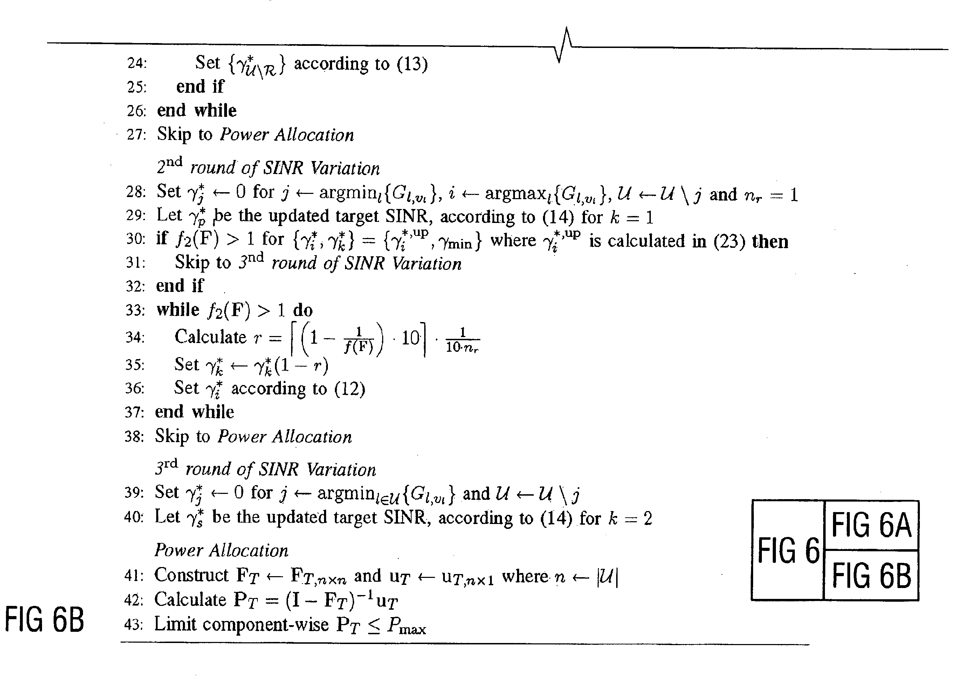

An embodiment of the PSS algorithm or scheduler is shown in Fig. 6 and will now be described. The focus of PSS is on femto-cellular networks, and hence on a single user per cell. In PSS, the target SINR of the individual users are modified in order to find a feasible $\mathbf{F}$ matrix, and hence a Pareto optimal system.

In the first part of the scheduler, all three links are active, and the feasibility of $\mathbf{F}$ is tested using (9). If this is >1, then the SINR targets need to be varied. In equation (10), $f(\mathbf{F})$ is expressed in terms of the $\gamma^*$'s and the set of constant coefficients A. By finding max{A}, and reducing the $\gamma^*$'s of which it is the coefficient, the value of $f(\mathbf{F})$ should decrease (this is because the multiplier for the largest coefficient, *i.e.*, that which has the most effect on $f(\mathbf{F})$, is being reduced, and hence the overall value of $f(\mathbf{F})$ should also decrease). This is repeated until $f(\mathbf{F})<1$. In the case, however, that a feasible $\mathbf{F}$ is not achievable with all $\gamma^* > \gamma_{min}$ (this is checked before anyhow in the *if* statements prior to the *while* loop), then a link needs to be turned off in order to maintain a minimum SINR at each MS, as well as be able to maintain the spectral efficiency. This is done in the second round of SINR variation.

In the second part of the algorithm depicted in Fig. 6, the feasibility conditioner $f(\mathbf{F})$ is now (22), and the MS $j$

with the weakest desired link gain is removed (*i.e.*, $\gamma_j^* = 0$). The SINR targets of both remaining users are updated by (14). Again, a check is performed whether the remaining two links can form a feasible **F** matrix given that the weaker SINR target $> \gamma_{min}$. If this is the case, then the same SINR reduction is performed on the MS with the weaker desired link, whereas the other active MS receives an SINR target boost given in (23). This is iterated until $f(\mathbf{F}) < 1$.

The third round of SINR variation is entered only if the feasibility checks on the first two rounds failed. In this case, the user with the best desired link gain is chosen as the only remaining active link, with a target SINR determined by (17). Then, the final part of the scheduler performs the power allocation to the users using POPC. Of course, if particular links have been turned off during the scheduling process, this is taken into account. In the end, providing the transmit power of the active MS is not limited by $P_{\mathrm{max}}$, the scheduler will deliver the targeted system spectral efficiency, while minimizing the system power.

In the following a proof for the convergence of $f(\mathbf{F})$ by the SINR variations (11) and (12) implemented in the above described algorithm will be provided.

The proof is based on the check condition implemented in the algorithm in lines 6-17 (see Fig. 6), where the SINR variation is not even performed if $f(\mathbf{F}) > 1$ for $\{\gamma_i^*, \gamma_j^*, \gamma_k^*\} = \{\gamma_{\mathrm{min}}, \gamma_{\mathrm{min}}, \gamma_k^{*,up}\}$. Thus, the convergence of the variation algorithm can be expressed as in the following Theorem:

Given $f(\mathbf{F}) \equiv f(\Gamma) > 1$, where $\Gamma = (\gamma_i, \gamma_j, \gamma_k)$, then iterative variations of $\Gamma$ according to equations (11) and (12) will converge to $f(\Gamma) < 1$ if

$$\mathrm{f}(\Gamma_{\mathrm{min}}) < 1 \qquad for \qquad \Gamma_{\mathrm{min}} = (\gamma_{min}, \gamma_{min}, \gamma_k^{up})$$

where $\gamma_k^{up}$ is updated to maintain spectral efficiency.

Proof: Given that $f(\Gamma) > 1$, $\gamma_i$ and $\gamma_j$ are updated iteratively as follows $\gamma_i^{(m+1)} \leftarrow \gamma_i^{(m)}(1 - r^{(m)})$

$\gamma_j^{(m+1)} \leftarrow \gamma_j^{(m)}(1 - r^{(m)})$ where $r$ is calculated by (11), $m = 0,1,2,...$, and if $f(\Gamma) > 1$ then $0 < r^{(m)} < 1$, and $(1 - r^{(m)}) < 1$. Hence, as long as $f(\Gamma) > 1$, $\gamma_i$ and $\gamma_j$ will continue to be reduced (upper-bounded by the geometric sequence of $\gamma_i$ $(1 - \min_m \{r^{(m)}\})^m$)

$$\gamma_i^{(n)} \leftarrow \gamma_{\mathrm{min}}$$

$$\gamma_j^{(n)} \leftarrow \gamma_{\mathrm{min}}$$

and hence $\Gamma \leftarrow \Gamma_{\mathrm{min}} = (\gamma_{min}, \gamma_{min}, \gamma_k^{up}$ where $\gamma_k^{up}$ is determined by (12) (due to the calculation of $r$ in equation (11), $\gamma_i^{(n)}, \gamma_j^{(n)}$ will most likely become smaller than $\gamma_{min}$; however in this case, they are simply set to $\gamma_{min}$ (as they should not go lower anyway), and $\gamma_k^{up}$ is calculated accordingly). Therefore, if $f(\Gamma_{\mathrm{min}}) < 1$, then the algorithm will eventually enter this region (see Fig. 5) where $f(\mathbf{F}) \equiv f(\Gamma) > 1$, and therefore the algorithm will converge.

The theorem and the corresponding proof also apply to $\max\{A\} = A_{123}$, where $n_r = 1$ in equation (11) and $\Gamma_{\mathrm{min}} = (\gamma_{min}, \gamma_j^{up}, \gamma_k^{up})$. Furthermore, it can also be applied to $K-1=2$, where $\Gamma_{\mathrm{min}} = (\gamma_{min}, \gamma_j^{up})$, and hence the algorithm converges in all of these cases.

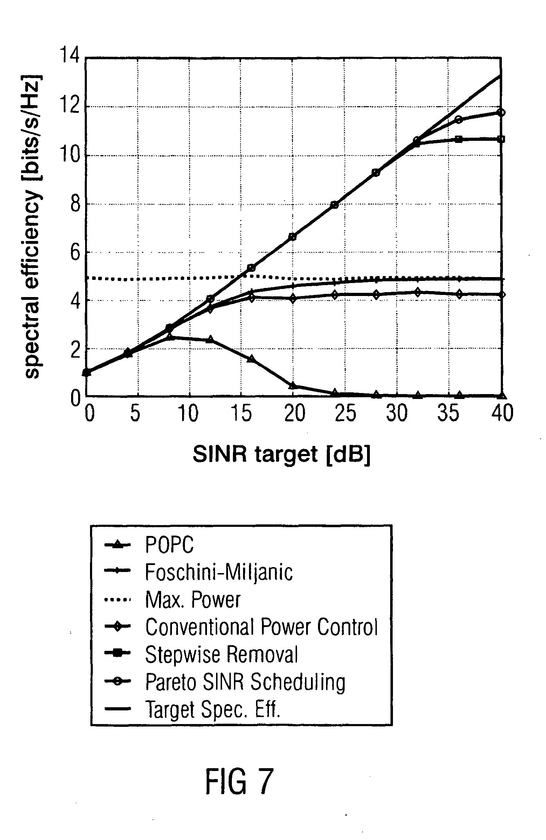

Fig. 7 depicts the spectral efficiency results for the various power allocation techniques over a range of representative SINR targets. As expected, the Foschini-Miljanic solution converges towards the maximum power system, while the POPC spectral efficiency performance converges to 0 bits/s/Hz already at $\gamma_{sys}^* = 12$ dB due to the infeasibility of the **F** matrix for large SINR. Through the removal of links in the Stepwise Removal algorithm and PSS, these are able to maintain the system spectral efficiency target up to $\gamma^*_{sys}$= 12dB, at which point the scheduling benefits of PSS become evident, gaining approximately 1 bit/s/Hz at 40dB. It is evident that PSS outperforms all other techniques for the scenario investigated.

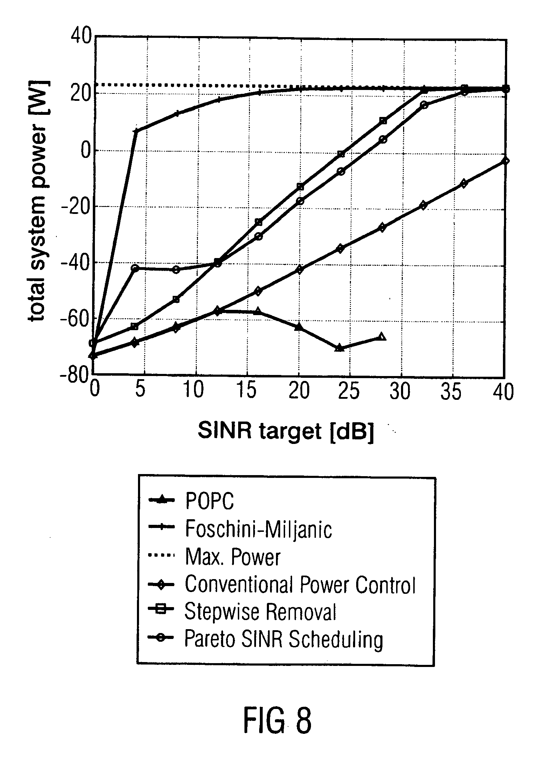

Fig. 8 displays the average power usage of the system for the various power allocation techniques. The convergence of the Foschini-Miljanic algorithm to a maximum power system can be seen, whereas both the Stepwise Removal algorithm and the F-SINR scheduler converge to a third of this value (*i.e.*, a single active MS transmitting at $P_{max}$). Here, PSS is able to use slightly less power, on average, as it allows more active users, and hence these do then not need to satisfy as high a SINR target through the updates by (14). Further, POPC always transmits with nearly no power at all, as it either transmits optimally (*i.e.*, when the original **F** is feasible) or not at all ( *i.e.*, when **F** is infeasible). All in all, however, it is again evident that PSS manages to minimize system power while satisfying the SINR requirements of the users.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer. A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein. A further embodiment comprises a computer having installed thereon the computer program for performing one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A method for scheduling users in a cellular environment ($C_1$, $C_2$, $C_3$) such that a Pareto optimal power control can be applied, the method comprising:

   determining whether a set of users ($x_1$, $x_2$, $x_3$) in the cellular environment fulfills a feasibility condition for the Pareto optimal power control; and
   in case the feasibility condition for the Pareto optimal power control is not fulfilled, modifying the SINR targets of the users ($x_1$, $x_2$, $x_3$) such that the feasibility condition for the Pareto optimal power control is fulfilled, wherein modifying the SINR targets comprises:

identifying the one or more users ($x_1$, $x_2$, $x_3$) that account for the largest contribution to the non-fulfillment of the feasibility condition for the Pareto optimal power control;

diminishing the respective SINR targets of the one or more users ($x_1$, $x_2$, $x_3$); and

augmenting the respective SINR targets of the remaining users ($x_1$, $x_2$, $x_3$) to maintain system spectral efficiency, and

wherein the feasibility condition is as follows:

$$F_{12}F_{21} + F_{13}F_{31} + F_{23}F_{32} + F_{12}F_{23}F_{31} + F_{13}F_{21}F_{32} < 1$$

where

$$F_{ij} = \frac{\gamma_i^* G_{j,v_i}}{G_{i,v_i}} \quad \text{are the elements of the interference matrix } \mathbf{F},$$

$\gamma_i^*$ is the target SINR of user $i$, and

$G_{j,v_i}$ is the path gain between user $j$ and the BS $v_i$ of user $i$.

2. The method of claim 1, wherein the respective SINR targets of the one or more users ($x_1$, $x_2$, $x_3$) are diminished as follows:

$$\gamma_i^* \leftarrow \gamma_i^*(1-r) \atop \gamma_j^* \leftarrow \gamma_j^*(1-r) \quad where \ r = \left\lceil \left(1 - \frac{1}{f(\mathbf{F})}\right) \cdot 10 \right\rceil \cdot \frac{1}{10 \cdot n_r},$$

where

$\gamma_i^*$ is the target SINR of user $i$,

$\gamma_j^*$ is the target SINR of user $j$,

$r$ represents the SINR reduction factor rounded up to a factor of 0.1, and

$n_r$ denotes the number of users whose SINR targets are being reduced; and

the respective SINR targets of the remaining users are augmented as follows:

$$\gamma_{k \neq \{i,j\}}^* = \frac{(1+\gamma_1^*)(1+\gamma_2^*)(1+\gamma_3^*)}{(1+\gamma_i^*(1-r))(1+\gamma_j^*(1-r))} - 1.$$

3. The method of claim 1 or 2, wherein, in case modifying the SINR targets of the users ($x_1$, $x_2$, $x_3$) does not result in the feasibility condition for the Pareto optimal power control to be fulfilled, the method further comprises:

deactivating the user having the weakest desired link gain;

adapting a SINR target of the remaining users to maintain system spectral efficiency;

determining whether the remaining users fulfill a modified feasibility condition; and

in case the remaining users do not fulfill the modified feasibility condition, iteratively modifying the SINR target values until the modified feasibility condition is fulfilled.

4. The method of claim 3, wherein in case the modified feasibility condition cannot be fulfilled by the users, the user having the best desired link gain is chosen as the only remaining active link.

5. The method of one of claims 1 to 4, further comprising:

in case there are one or more users ($x_1$, $x_2$, $x_3$) that prevent the satisfaction of the feasibility condition, switching off the associated links.

6. The method of claim 5, wherein the links are switched off over a plurality of consecutive time slots, wherein the SINR target of the remaining links is changed for maintaining the system spectral efficiency.

7. The method of claim 6, wherein the SINR target of the remaining links is changed as follows:

$$\gamma_{(1),up}^{\bullet} = \frac{\prod_{j}^{K}\left(1+\gamma_{j}^{\bullet}\right)}{1+\gamma_{(2),up}^{\bullet}} - 1,$$

where $\gamma_{(i),up}^{\bullet}$ represents the updated SINR target of the $i^{th}$ remaining link.

8. The method of one of claims 1 to 7, comprising for each combination fulfilling the feasibility condition:

calculating the Pareto optimal power allocation and assigning it to the users $(x_1, x_2, x_3)$.

9. A computer program product comprising instructions to perform a method of one of claims 1 to 8 when executing the instructions on a computer.

10. A scheduler for a wireless network having a plurality of cells $(C_1, C_2, C_3)$ and a plurality of users $(x_1, x_2, x_3)$, the scheduler being configured to schedule the users in accordance with one of claims 1 to 8.

11. A wireless network comprising a plurality of cells $(C_1, C_2, C_3)$, a plurality of users $(x_1, x_2, x_3)$, and a scheduler of claim 10.

**Patentansprüche**

1. Ein Verfahren zum Planen von Nutzern in einer zellularen Umgebung $(C_1, C_2, C_3)$, so dass eine Pareto-optimale Leistungssteuerung angewendet werden kann, wobei das Verfahren folgende Schritte aufweist:

Bestimmen, ob ein Satz von Nutzern $(x_1, x_2, x_3)$ in der zellularen Umgebung eine Machbarkeitsbedingung für die Pareto-optimale Leistungssteuerung erfüllt; und
falls die Machbarkeitsbedingung für die Pareto-optimale Leistungssteuerung nicht erfüllt ist, Modifizieren der SINR-Ziele der Nutzer $(x_1, x_2, x_3)$, so dass die Machbarkeitsbedingung für die Pareto-optimale Leistungssteuerung erfüllt ist,
wobei das Modifizieren der SINR-Ziele folgende Schritte aufweist:

Identifizieren des einen oder der mehreren Nutzer $(x_1, x_2, x_3)$, die den größten Beitrag zu der Nichterfüllung der Machbarkeitsbedingung für die Pareto-optimale Leistungssteuerung ausmachen;
Verringern der jeweiligen SINR-Ziele des einen oder der mehreren Nutzer $(x_1, x_2, x_3)$; und
Verstärken der jeweiligen SINR-Ziele der verbleibenden Nutzer $(x_1, x_2, x_3)$, um eine spektrale Effizienz des Systems beizubehalten, und

wobei die Machbarkeitsbedingung wie folgt ist:

$$F_{12}F_{21} + F_{13}F_{31} + F_{23}F_{32} + F_{12}F_{23}F_{31} + F_{13}F_{21}F_{32} < 1$$

wobei

$$F_{ij} = \frac{\gamma_i^* G_{j,v_i}}{G_{i,v_i}}$$ die Elemente der Interferenzmatrix F sind,

$\gamma_i^*$ das Ziel-SINR des Nutzers $i$ ist, und

$G_{j,vi}$ der Pfadgewinn zwischen dem Nutzer $j$ und der BS $v_i$ des Nutzers $i$ ist.

2.  Das Verfahren gemäß Anspruch 1, bei dem
    die jeweiligen SINR-Ziele des einen oder der mehreren Nutzer ($x_1$, $x_2$, $x_3$) wie folgt verringert werden:

$$\gamma_i^* \leftarrow \gamma_i^*(1-r) \atop \gamma_j^* \leftarrow \gamma_j^*(1-r)} \quad where \; r = \left\lceil \left(1 - \frac{1}{f(\mathbf{F})}\right) \cdot 10 \right\rceil \cdot \frac{1}{10 \cdot n_r},$$

wobei

$\gamma_i^*$ das Ziel-SINR des Nutzers $i$ ist,
$\gamma_j^*$ das Ziel-SINR des Nutzers $j$ ist,
$r$ den SINR-Reduktionsfaktor aufgerundet auf einen Faktor von 0.1 darstellt, und
$n_r$ die Anzahl von Nutzern bezeichnet, deren SINR-Ziele reduziert werden; und

die jeweiligen SINR-Ziele der verbleibenden Nutzer wie folgt verstärkt werden:

$$\gamma_{k \neq \{i,j\}}^* = \frac{(1+\gamma_1^*)(1+\gamma_2^*)(1+\gamma_3^*)}{(1+\gamma_i^*(1-r))(1+\gamma_j^*(1-r))} - 1.$$

3.  Das Verfahren gemäß Anspruch 1 oder 2, bei dem, falls das Modifizieren der SINR-Ziele der Nutzer ($x_1$, $x_2$, $x_3$) nicht dazu führt, dass die Machbarkeitsbedingung für die Pareto-optimale Leistungssteuerung erfüllt wird, das Verfahren ferner folgende Schritte aufweist:

    Deaktivieren des Nutzers mit dem schwächsten gewünschten Verbindungsgewinn;
    Anpassen eines SINR-Ziels der verbleibenden Nutzer, um eine spektrale Effizienz des Systems beizubehalten;
    Bestimmen, ob die verbleibenden Nutzer eine modifizierte Machbarkeitsbedingung erfüllen; und
    falls die verbleibenden Nutzer die modifizierte Machbarkeitsbedingung nicht erfüllen, iteratives Modifizieren der SINR-Zielwerte, bis die modifizierte Machbarkeitsbedingung erfüllt ist.

4.  Das Verfahren gemäß Anspruch 3, bei dem, falls die modifizierte Machbarkeitsbedingung durch die Nutzer nicht erfüllt werden kann, der Nutzer mit dem besten gewünschten Verbindungsgewinn als die einzige verbleibende aktive Verbindung gewählt wird.

5.  Das Verfahren gemäß einem der Ansprüche 1 bis 4, das ferner folgenden Schritt aufweist:

    falls es einen oder mehr Nutzer ($x_1$, $x_2$, $x_3$) gibt, die die Erfüllung der Machbarkeitsbedingung verhindern, Abschalten der zugeordneten Verbindungen.

6.  Das Verfahren gemäß Anspruch 5, bei dem die Verbindungen über eine Mehrzahl von aufeinanderfolgenden Zeitschlitzen abgeschaltet werden, wobei das SINR-Ziel der verbleibenden Verbindungen geändert wird, um eine spektrale Effizienz des Systems beizubehalten.

7.  Das Verfahren gemäß Anspruch 6, bei dem das SINR-Ziel der verbleibenden Verbindungen wie folgt geändert wird:

$$\gamma^*_{(1),\mathrm{u}p} = \frac{\prod\limits_{j}^{K}\left(1+\gamma^*_j\right)}{1+\gamma^*_{(2),\mathrm{u}p}} - 1,$$

wobei $\gamma^*_{(i),\mathrm{u}p}$ das aktualisierte SINR-Ziel der *i*-ten verbleibenden Verbindung darstellt.

**8.** Das Verfahren gemäß einem der Ansprüche 1 bis 7, das für jede Kombination, die die Machbarkeitsbedingung erfüllt, folgenden Schritt aufweist:

Berechnen der Pareto-optimalen Leistungszuordnung und Zuweisen derselben zu den Nutzern ($x_1$, $x_2$, $x_3$).

**9.** Ein Computerprogrammprodukt, das Anweisungen aufweist um ein Verfahren gemäß einem der Ansprüche 1 bis 8 durchzuführen, wenn die Anweisungen auf einem Computer ausgeführt werden.

**10.** Ein Planer für ein drahtloses Netzwerk mit einer Mehrzahl von Zellen ($C_1$, $C_2$, $C_3$) und einer Mehrzahl von Nutzern ($x_1$, $x_2$, $x_3$), wobei der Planer konfiguriert ist, um die Nutzer gemäß einem der Ansprüche 1 bis 8 zu planen.

**11.** Ein drahtloses Netzwerk, das eine Mehrzahl von Zellen ($C_1$, $C_2$, $C_3$), eine Mehrzahl von Nutzern ($x_1$, $x_2$, $x_3$) und einen Planer gemäß Anspruch 10 aufweist.

**Revendications**

**1.** Procédé de programmation d'utilisateurs dans un environnement cellulaire ($C_1$, $C_2$, $C_3$) de sorte que puisse être appliqué un contrôle de puissance optimum de Pareto, le procédé comprenant le fait de:

déterminer si un ensemble d'utilisateurs ($x_1$, $x_2$, $x_3$) dans l'environnement cellulaire remplit une condition de faisabilité pour le contrôle de puissance optimum de Pareto; et
au cas où la condition de faisabilité pour le contrôle de puissance optimum de Pareto n'est pas remplie, modifier les cibles de SINR des utilisateurs ($x_1$, $x_2$, $x_3$) de sorte que la condition de faisabilité pour le contrôle de puissance optimum de Pareto soit remplie,
dans lequel le fait de modifier les cibles de SINR comprend le fait de:

identifier un ou plusieurs utilisateurs ($x_1$, $x_2$, $x_3$) qui représentent la plus grande contribution au fait que la condition de faisabilité pour le contrôle de puissance optimum de Pareto ne soit pas remplie;
diminuer les cibles de SINR respectives des un ou plusieurs utilisateurs ($x_1$, $x_2$, $x_3$); et
augmenter les cibles de SINR respectives des utilisateurs restants ($x_1$, $x_2$, $x_3$), pour maintenir l'efficacité spectrale du système, et

dans lequel la condition de faisabilité est la suivante:

$$F_{12}F_{21} + F_{13}F_{31} + F_{23}F_{32} + F_{12}F_{23}F_{31} + F_{13}F_{21}F_{32} < 1$$

où

$$F_{ij} = F_{ij} = \frac{\gamma^*_i G_{j,v_i}}{G_{i,v_i}}$$ sont les éléments de la matrice d'interférence F,

$\gamma^*_i$ est le SIR cible de l'utilisateur *i*, et
$G_{j,v_i}$ est le gain de trajet entre l'utilisateur *j* et le BS $v_1$ de l'utilisateur *i*.

**2.** Procédé selon la revendication 1, dans lequel
les cibles de SINR respectives des un ou plusieurs utilisateurs ($x_1$, $x_2$, $x_3$) sont diminués comme suit:

$$\gamma_i^* \leftarrow \gamma_i^*(1-r) \\ \gamma_j^* \leftarrow \gamma_j^*(1-r) \quad where \ r = \left\lceil \left( 1 - \frac{1}{f(\mathbf{F})} \right) \cdot 10 \right\rceil \cdot \frac{1}{10 \cdot n_r},$$

où

$\gamma_i^*$ est le SINR cible de l'utilisateur $i$,
$\gamma_j^*$ est le SINR cible de l'utilisateur $j$,
$r$ représente le facteur de réduction de SINR arrondi jusqu'à un facteur de 0,1, et
$n_r$ désigne le nombre d'utilisateurs dont les cibles de SINR sont réduits; et

les cibles de SINR respectives des utilisateurs restants sont complétées comme suit:

$$\gamma_{k \neq \{i,j\}}^* = \frac{(1+\gamma_1^*)(1+\gamma_2^*)(1+\gamma_3^*)}{(1+\gamma_i^*(1-r))(1+\gamma_j^*(1-r))} - 1.$$

**3.** Procédé selon la revendication 1 ou 2, dans lequel, au cas où le fait de modifier les cibles de SIR des utilisateurs ($x_1$, $x_2$, $x_3$) ne conduit pas à ce que la condition de faisabilité pour le contrôle de puissance optimum de Pareto soit remplie, le procédé comprend par ailleurs le fait de:

désactiver l'utilisateur présentant le plus faible gain de lien désiré;
adapter une cible de SINR des utilisateurs restants, pour maintenir l'efficacité spectrale du système;
déterminer si les utilisateurs restants remplissent une condition de faisabilité modifiée; et
au cas où les utilisateurs restants ne remplissent pas la condition de faisabilité modifiée, modifier de manière itérative les valeurs cibles de SINR jusqu'à ce que soit remplie la condition de faisabilité modifiée.

**4.** Procédé selon la revendication 3, dans lequel, au cas où la condition de faisabilité de modifiée ne peut être remplie par les utilisateurs, l'utilisateur présentant le meilleur gain de lien désiré est choisi comme le seul lien actif restant.

**5.** Procédé selon l'une des revendications 1 à 4, comprenant par ailleurs:

au cas où il y existe un ou plusieurs utilisateurs ($x_1$, $x_2$, $x_3$) qui empêchent que soit remplie la condition de faisabilité, désactiver les liens associés.

**6.** Procédé selon la revendication 5, dans lequel les liens sont désactivés sur une pluralité d'intervalles de temps successifs, dans lequel la cible de SINR des liens restants est modifiée pour maintenir l'efficacité spectrale du système.

**7.** Procédé selon la revendication 6, dans lequel la cible de SINR des liens restants est modifiée comme suit :

$$\gamma_{(1),\mathrm{u}p}^* = \frac{\prod_{j}^{K}\left(1+\gamma_j^*\right)}{1+\gamma_{(2),\mathrm{u}p}^*} - 1,$$

où $\gamma^{*}_{(i),up}$ représente la cible de SINR mise à jour du i-ème lien restant.

8. Procédé selon l'une des revendications 1 à 7, comprenant, pour chaque combinaison remplissant la condition de faisabilité le fait de:

calculer l'attribution de puissance optimale de Pareto et l'attribuer aux utilisateurs ($x_1$, $x_2$, $x_3$).

9. Programme d'ordinateur comprenant des instructions pour réaliser un procédé selon l'une des revendications 1 à 8 lors de l'exécution des instructions sur un ordinateur.

10. Programmateur de réseau sans fil présentant une pluralité de cellules ($C_1$, $C_2$, $C_3$) et une pluralité d'utilisateurs ($x_1$, $x_2$, $x_3$), le programmateur étant configuré pour programmer les utilisateurs selon l'une des revendications 1 à 8.

11. Réseau sans fil comprenant une pluralité de cellules ($C_1$, $C_2$, $C_3$), une pluralité d'utilisateurs ($x_1$, $x_2$, $x_3$), et un programmateur selon la revendication 10.

FIG 1

FIG 2A

FIG 2B

FIG 2C

EP 2 536 224 B1

◇ BS receiver
✕ Mobile transmitter

BS$_1$

✕$_1$

◇BS$_3$

✕$_3$

✕$_2$

◇BS$_2$

FIG 3

S$_{sys}$

S$_1$  S$_2$  S$_3$

S$_{sys}$

≈S$_1$ ┊ S$_2$ ┊ S$_3$

FIG 4

FIG 5

**Algorithm 1** Pareto SINR Scheduler

1: Let $\mathcal{U}$ be the set of users

2: Let $\gamma_{\min} = 1$ be the minimum required SINR

3: Let $f_3(F) \leftarrow (9)$ and $f_2(F) \leftarrow (22)$

    *1st round of SINR Variation*

4: Let $\gamma_g^*$ be the known, system-wide target SINR

5: Let $\mathcal{A}$ be the set containing the coefficients of $f(F)$ in (10)

6: **if** $\max\{\mathcal{A}\} = A_{ij} \neq A_{123}$ **then**

7:    $n_r \leftarrow 2$; $\mathcal{R} \leftarrow \{i, j\}$ is set of MSs whose $\gamma^*$ will be reduced

8:    **if** $f_3(F) > 1$ for $\{\gamma_i^*, \gamma_j^*, \gamma_k^*\} = \{\gamma_{\min}, \gamma_{\min}, \gamma_k^{*,\mathrm{up}}\}$ where $\gamma_k^{*,\mathrm{up}}$ is calculated in (12) **then**

9:        Skip to $2^{\mathrm{nd}}$ *round of SINR Variation*

10:    **end if**

11: **else**

12:    Find strongest interferer MS $i \leftarrow \mathrm{argmax}_i \sum_j F_{ji}$

13:    $n_r \leftarrow 1$; $\mathcal{R} \leftarrow \{i\}$

14:    **if** $f_3(F) > 1$ for $\{\gamma_i^*, \gamma_j^*, \gamma_k^*\} = \{\gamma_{\min}, \gamma_j^{*,\mathrm{up}}, \gamma_k^{*,\mathrm{up}}\}$ where $\gamma_j^{*,\mathrm{up}}, \gamma_k^{*,\mathrm{up}}$ are calculated in (13) **then**

15:        Skip to $2^{\mathrm{nd}}$ *round of SINR Variation*

16:    **end if**

17: **end if**

18: **while** $f_3(F) > 1$ **do**

19:    Calculate $r = \left\lceil \left(1 - \frac{1}{f(F)}\right) \cdot 10 \right\rceil \cdot \frac{1}{10 \cdot n_r}$

20:    Set $\{\gamma_{\mathcal{R}}^*\} \leftarrow \{\gamma_{\mathcal{R}}^*\}(1 - r)$

21:    **if** $n_r = 2$ **then**

22:        Set $\{\gamma_{\mathcal{U}\backslash\mathcal{R}}^*\}$ according to (12)

23:    **else**

FIG 6A

| FIG 6 | FIG 6A |
|---|---|
|  | FIG 6B |

EP 2 536 224 B1

EP 2 536 224 B1

24:    Set $\{\gamma^*_{\mathcal{U}\backslash\mathcal{R}}\}$ according to (13)

25:  **end if**

26: **end while**

27: Skip to *Power Allocation*

  $2^{\text{nd}}$ *round of SINR Variation*

28: Set $\gamma^*_j \leftarrow 0$ for $j \leftarrow \text{argmin}_l\{G_{l,v_l}\}$, $i \leftarrow \text{argmax}_l\{G_{l,v_l}\}$, $\mathcal{U} \leftarrow \mathcal{U} \backslash j$ and $n_r = 1$

29: Let $\gamma^*_p$ be the updated target SINR, according to (14) for $k = 1$

30: **if** $f_2(\mathbf{F}) > 1$ for $\{\gamma^*_i, \gamma^*_k\} = \{\gamma^{*,\text{up}}_i, \gamma_{\min}\}$ where $\gamma^{*,\text{up}}_i$ is calculated in (23) **then**

31:    Skip to $3^{\text{nd}}$ *round of SINR Variation*

32: **end if**

33: **while** $f_2(\mathbf{F}) > 1$ **do**

34:    Calculate $r = \left\lceil \left(1 - \frac{1}{f(\mathbf{F})}\right) \cdot 10 \right\rceil \cdot \frac{1}{10 \cdot n_r}$

35:    Set $\gamma^*_k \leftarrow \gamma^*_k(1 - r)$

36:    Set $\gamma^*_i$ according to (12)

37: **end while**

38: Skip to *Power Allocation*

  $3^{\text{rd}}$ *round of SINR Variation*

39: Set $\gamma^*_j \leftarrow 0$ for $j \leftarrow \text{argmin}_{l \in \mathcal{U}}\{G_{l,v_l}\}$ and $\mathcal{U} \leftarrow \mathcal{U} \backslash j$

40: Let $\gamma^*_s$ be the updated target SINR, according to (14) for $k = 2$

  *Power Allocation*

41: Construct $\mathbf{F}_T \leftarrow \mathbf{F}_{T,n\times n}$ and $\mathbf{u}_T \leftarrow \mathbf{u}_{T,n\times 1}$ where $n \leftarrow |\mathcal{U}|$

42: Calculate $\mathbf{P}_T = (\mathbf{I} - \mathbf{F}_T)^{-1}\mathbf{u}_T$

43: Limit component-wise $\mathbf{P}_T \leq P_{\max}$

**FIG 6B**

| FIG 6 | FIG 6A |
|       | FIG 6B |

FIG 7

FIG 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2045930 A1

**Non-patent literature cited in the description**

- **X. LI ; L. QIAN ; D. KATARIA.** Downlink power control in co-channel macrocell femtocell overlay. *Proc. Conference on Information Sciences and Systems (CISS),* 2009, 383-388
- **B.-G. CHOI ; E. S. CHO ; M.Y. CHUNG ; K.-Y. CHEON ; A.-S. PARK.** A femtocell power control scheme to mitigate interference using listening tdd frame. *Proc. International Conference on Information Networking (ICOIN),* January 2011, 241-244
- **E.J. HONG ; S.Y. YUN ; D.-H. CHO.** Decentralized power control scheme in femtocell networks: A game theoretic approach. *Proc. Personal, Indoor and Mobile Radio Communications (PIMRC),* 2009, 415-419
- **A. RAO.** Reverse Link Power Control for Managing Inter-Cell Interference in Orthogonal Multiple Access Systems. *Proc. Of Vehicular Technology Conference (VTV),* October 2007, 1837-1841
- **KOLYUZHNOV, D. et al.** Power Controlled Random Access in Multi-Cell OFDMA Uplink. *Vehicular Technology Conference, 2008. VTC 2008-Fall. IEEE 68,* 21 September 2008, 1-5
- **HANDE P et al.** Distributed Uplink Power Control for Optimal SIR Assignment in Cellular Data Networks. *Infocom 2006, 25th IEEE International Conference on Computer Communications,* 01 April 2006, 1-13
- **A. GOLDSMITH.** Wireless Communications. Cambridge University Press, 2005
- **E. JURY.** A simplified stability criterion for linear discrete systems. *Proceedings of the IRE,* 1962, vol. 50 (6), 1493-1500
- **A. GOLDSMITH.** Wireless Communications. University Press, 2005